# EUROPEAN PATENT APPLICATION

(11) **EP 4 804 432 A1**
(43) Date of publication of application: **09.09.2026**
(21) Application number: 26161666.8
(22) Date of filing: 02.03.2026
(51) Int. Cl.: H04B 17/318, H04W 4/33, H04W 4/90, H04W 24/04, H04W 24/08, H04W 24/10, H04W 84/18

(54) **DAS ASSURANCE MONITOR AND LOCATION NODE**

(30) Priority: 03.03.2025 US 202563766100 P; 12.08.2025 US 202563862374 P
(71) Applicant: TX RX Systems, Inc., Angola, NY 14006 (US)
(72) Inventor: POKIGO, Kenneth, New York (US); DOBMEIER, Zachary, New York (US); CUDDIHY, David, New York (US); MATTULKE, Tim, New York (US)
(74) Representative: Definition IP Limited

(57) **Abstract**

A combined distributed antenna system (DAS) and mesh network system configured to operate at a set location to assist first responders in effectively combating a disaster, such as a fire. The system utilizes DAS monitoring nodes (DMN) to monitor antennas and generate a receive signal strength indicator across a corresponding channel. A mesh network is formed between receivers, beacons, gateway devices, and collectors at the location. Each receiver is at a unique position within the location and transmits a unique identification with location coordinates indicative of its position. Each receive also includes corresponding sensors to take measures proximate the receiver. Beacon devices are carried by users, such as first responders, and communicate with the receivers such that the system can track the position of the first responder relative to other conditions in the building measured by the sensors.

## Description

### TECHNICAL FIELD

The subject disclosure relates generally to systems for tracking and measuring criteria over a distributed antennas system and/or mesh network to determine precise location information of various people and conditions, particularly as used as part of a system and method for assisting first responders in tracking and managing disasters such as fires.

### BACKGROUND

In the case of public safety and mission critical communication systems operating correctly within public buildings, there is a critical importance placed on a distributed antennas system (DAS) for its reliability in performing its function of providing RF signal integrity within areas of the building. Typically these DAS systems are driven by a bidirectional amplifier (BDA) which amplifies the RF signal to and from a remote donor site located a distance away from the building. The BDA is connected to a series of antennas located within the building and this creates a DAS. These antennas bring the RF signals into important areas of the building to allow for public safety and mission critical radio communications operation within the building.

Over-time the DAS system can under-perform, or even worse fail in operation completely. Antennas, transmission lines or the BDA can be damaged causing failure in critical communications systems which may not be identified until the last moment when radio operation is expected in a coverage area. Additionally, there is a need to provide information on the specific location of said DAS equipment to provide feedback on operational functionality of the entire systems and to help better determine the location of failures, cellular devices and/or issues.

Most of the time the DAS system is initially verified with RF signal measurements that are taken throughout the building manually using handheld measurement devices. This is a tedious task and involves walking around the building with expensive measurement equipment and recording the initial measurements. This process would have to be repeated over time and it would not be practical to do this on a continual basis to assure DAS signal integrity.

Additionally, existing systems lack capabilities to effectively assist first responders in managing disasters within a building.

Further, during an emergency, certain DAS systems can stop working altogether and/or portions of the antenna system will no longer broadcast signals in parts of the structure. This situation is usually not discovered until an emergency occurs, and the DAS is fully or partially inoperable.

### SUMMARY

In accordance with a first aspect of the invention there is provided a combined distributed antenna system (DAS) and mesh network system configured to operate at a set location. The system comprises: a plurality of DAS monitoring nodes (DMN), each DMN configured to monitor at least one corresponding DAS antenna, the DMN each configured to: receive RF signals at a plurality of frequencies for different channels of the at least one corresponding DAS antenna; generate a receive signal strength indicator (RSSI) of the RF signals for each channel; and determine a DAS antenna status for each channel based on whether the RSSI is above a predetermined threshold. The system further comprises a mesh network formed between a plurality of receivers, a plurality of beacons, at least one gateway device, and at least one collector, wherein: each receiver is positioned at a unique position within the location and is configured to wirelessly transmit and receive data over the mesh network, each receiver including a unique identification with location coordinates indicative of its position within the location, and each receiver further including a corresponding sensor configured to take measurements proximate to said receiver. Each beacon is configured to be carried by a user and to communicate with the receivers. Each gateway device is configured to receive data from a plurality of the receivers and transmit data to the collector. The system is configured to: map a layout of the receivers within the location based on the unique identification of each receiver; determine a location of each beacon based on communication between the beacon and receivers and using the location coordinates of the receivers; indicate an alarm condition when needed based on DAS antenna status; and determine a position of condition within the location based on data from the sensors and the DMNs.

Optionally, each beacon is a Specialized Personal Location Device (SPLD) configured to: transmit the position of said device within the location; and announce a mayday across the mesh network for said SPLD.

Optionally, the receivers act as repeaters to form the mesh network, relaying wireless data between the receivers and the at least one gateway device; and each at least one gateway device acts as a wireless hub, aggregating information for one designated floor of a building corresponding to the location.

Optionally, the system further incorporates an emergency responder communication enhancement system as part of the mesh network to backhaul data to the collector.

Optionally, the receivers each include a corresponding temperature sensor to measure temperature data proximate said receiver; and the mesh network forms a heat map of a structure at the location based on temperature data at the receivers.

Optionally, receivers are configured such that when the temperature proximate the receiver exceeds a set threshold, said receiver sends an elevated temperature notification to a gateway, which in turn sends an elevated temperature notification to the collector to initiate an alarm condition.

Optionally, each receiver includes at least one sensor configured to measure one or more of the following: mayday signals, first responder critical information and identity associated with one of the beacons, telemetric data, temperature, barometric pressure, latitude and longitude, structure floor locations, common name locations within structure, beacon movement with the structure.

Optionally, each beacon includes a mayday alarm activatable at the beacon which initiates bi-directional communication over the system and sends a current position of the beacon within the location.

Optionally, anytime a radio within the location is keyed-up, the system stores last known location information for said radio based on the proximity of the receivers.

In accordance with a second aspect of the invention there is provided a system for monitoring and tracking performance of a plurality of distributed antenna system (DAS) antennas spread over a location. The system comprises: a plurality of DAS monitoring nodes (DMN), each DMN configured to monitor at least one corresponding DAS antenna, the DMN each configured to: receive RF signals at a plurality of frequencies for different channels of the at least one corresponding DAS antenna; generate a receive signal strength indicator (RSSI) of the RF signals for each channel; determine a DAS antenna status for each channel based on whether the RSSI is above a predetermined threshold; and indicate an alarm condition when needed based on DAS antenna status. The system further comprising at least one alarm collector configured to collect information from each of the plurality of DMNs, including any indications of alarm conditions; and an overview interface module configured to collect data from the alarm collector and/or the plurality of DAS monitoring nodes and generate a system integrity overview based on the data collected.

Optionally, the system further comprises a bidirectional amplifier which amplifies RF signals for transmission between the DAS antennas and a remote donor site located away from the location of the DAS antennas.

Optionally, each DMN is mapped to a specific coverage area within the location such that the entire location has at least one DMN mapped to each area within the location; and the system is further configured to determine coverage over the entire location based on the DAS antenna status at each specific coverage area.

Optionally, at least one DMN monitors multiple corresponding DAS antennas.

Optionally, each DMN is configured to monitor a path through the location, each path having one or more of the DAS antennas; and at least one DMN monitors a path comprised of multiple DAS antennas.

Optionally, at least one of the DMN is further configured to provide location information indicating a location of the DMN.

Optionally, the at least one DMN configured to provide location information is configured as a First Responder (FR) Location Node.

Optionally, the FR Location Node is configured to utilize a short-range wireless technology to communicate with an application on a device to determine a proximity to the FR Location Node.

Optionally, the system is configured to process device proximity information from multiple FR Location Nodes to determine a position of the device within the location.

Optionally, each device is a Specialized Personal Location Device (SPLD) configured to transmit the position of said device within the location; and each device is connected to a network and configured to announce a mayday, for said device, across the network.

Optionally, a plurality of DMN are configured as First Responder (FR) Location Nodes; and the device can be a cellphone or a Specialized Personal Location Device (SPLD) carried by an individual, the device configured to communicate with the FR Location Node using the short-range wireless technology to determine a position of the device when said individual is in close proximity to one of the FR Location Nodes.

The subject technology provides a system and method of operation to monitor chosen portions of the in-building critical communications system and provide continual assurance of this operation as well as notify responsible parties when parts of the system are not performing correctly. The technology disclosed herein provides a solid reliable monitoring platform which allows for the user to observe real-time signal levels at remote DAS coverage areas which are coming from a particular antenna or section of the building. When DAS systems are implemented, the systems designer is tasked with configuring a DAS system that will provide a certain RF signal level capability in various sections of the building. The minimum signal levels required are defined by codes in the local authority having jurisdiction (AHJ). In order to have the DAS system approved for operation by the AHJ, there must be coverage verification measurement of receive signal strength indication RSSI levels through the designated areas of the building and these levels are mapped to the floor plan using grid square partitioning. The information is then recorded as the approved baseline for the DAS system operation.

Over time the signals levels may no longer be at an acceptable level to be reliable, or worse yet may not present at all. This could go unnoticed at a critical time, if a monitoring system is not implemented.

As will be discussed more herein, the subject disclosure generally provides a monitoring system that measures receive signal strength on given frequency channels on a continuous basis. In some implementations, the advantages of the technology disclosed herein include the following, among others:
The system provides continuous ongoing RSSI measurements of the actual users frequencies.

The nodes can be connected using independent hardwired data connection and does not rely on using the DAS infrastructure at all. It really doesn't make great sense to use a wireless data connection to validate a wireless radio system which may have compromised RF penetration already.

The nodes act as actual radio receivers just like handheld radios used by a person standing there.

The nodes can transmit a test signal back through the DAS. This can even be used to Key-up the repeater to initiate a TX back from the donor site.

Each node does not necessarily need to be mounted in close proximity to the DAS antenna but instead mounted in an area that there is a concern that the radio signal from the DAS is not penetrating.

Each node can be configured in a scanning mode to find interfering signals.

Measurement data is stored in a log file system and on-demand graphs presented to look for degradation of the signals.

The node itself will provide direct visual feedback using LED indicators.

The node does not need an individual local power source. This is provided from the Alarm Collector over the wired data cable.

The alarm collector software provides an interface to setup and configure each node on any of the 4 connected data ports.

Through its control software, each alarm collector allows for connections to monitor up to 16 locations at one time.

For example, 16 Alarm collectors can then be connected back to an OIM providing an overview of up to 256 different areas of a building or campus.

Each alarm collector can absorb digital alarm inputs from 2 DAS driving BDAs or Remote End Units. This allows the user to monitor more information including BDA/RE unit operation.

The node will be capable to measure bit error rate (BER) for digital signals.

The interface will provide a connection back to the Fire panel indicating the state of the DAS.

The OIM provides master control and monitoring software to interface with the entire system.

The OIM software provides a graphical user interface with the ability to add custom floor plans illustrating the location of the connected BDAs and Nodes. This gives the ability to immediately identify where the DAS failure locations may be.

The OIM will provide an interface to the fire panel for Alarming.

The OPIM has an OLED screen located on its front panel for quick information about status of the DAS.

The OIM will log signal levels of nodes over time into a historical database, from which reports can be generated.

The OIM software provides access to setup and configure each node on the entire network.

The system disclosed herein can be implemented in different setups, including different numbers of each component of the system disclosed herein, depending on the area to be covered. For example, in some instances, the system can be designed to cover a single floor of a building, or multiple floors of a building. In other instances, the system can be designed to cover multiple campus buildings across a campus. In yet other instances, the system can be designed to cover several separate locations that are not connected. It should be understood that different numbers of components, such as different numbers of alarm collectors, DAS antennas, and DMN can be implemented depending on the design of the system.

The nodes can also be used as a device to provide addition tracking/locational information, that when used in conjunction with a first responder tracking cellphone-based application (cellphone app) or a specialized personal location device, will enhance the precision of locating first responders within a high rise-building, or other structures, sub-basements/tunnels, open field, forested area etc. (structures). This specific product application is referred to as First Responder (FR) Location Node.

The Specialized Personal Location Device (SPLD) will have the ability to act as a personal location mayday signaling transmitter to communicate with the FR Location Node, enabling the system to announce the mayday (a call for assistance) to anyone on the network. Said mayday call can either be triggered by the user of the SPLD or because of conditions that would warrant such an assistance call be made. Further the SPLD will provide a transmission to allow others on the network to precisely locate the mayday sender.

One solution implemented herein is to provide a signal that can be monitored by a first responder cellphone application, that will include direct location information. The FR Location Node will periodically send out an RF ping signal on a given frequency. The signal will contain information about its exact location within the structure. The first responder cellphone application will absorb the information from these devices to make a determination of the position within the building, field, forest, etc. and use these data for closer calibration of the position tracking for z-axis elevation or x-y position. In the event that cellphone signal is not available, the SPLD will be able to serve as a transmit and receive device to provide locational information on the user. This same product has many other applications as well, which are not inclusively listed herein but may include a military version designed for use in urban combat situations and law enforcement for multi-situational deployment.

Various further features and aspects of the invention are defined in the claims.

### BRIEF DESCRIPTION OF THE DRAWINGS

So that those having ordinary skill in the art to which the disclosed system pertains will more readily understand how to make and use the same, reference may be had to the following drawings.
FIG. 1 is a block diagram of a distributed antennas system (DAS) in accordance with the subject technology.
FIG. 2a is a schematic of a basement floor of a building configured with a mesh network system, alone or in combination with a DAS system in accordance with the subject technology.
FIG. 2b is a schematic of the first floor of the building of FIG. 2a and implementing the same system.

### DETAILED DESCRIPTION

The subject technology overcomes many of the prior art problems associated with systems designed to assist first responders in managing a disaster, such as a fire, within a building. The advantages, and other features of the systems and methods disclosed herein, will become more readily apparent to those having ordinary skill in the art from the following detailed description of certain preferred embodiments taken in conjunction with the drawings which set forth representative embodiments of the present invention. Like reference numerals are used herein to denote like parts. Further, words denoting orientation such as "upper," "lower," "distal," and "proximate" are merely used to help describe the location of components with respect to one another. For example, an "upper" surface of a part is merely meant to describe a surface that is separate from the "lower" surface of that same part. No words denoting orientation are used to describe an absolute orientation (i.e., where an "upper" part must always be at a higher elevation).

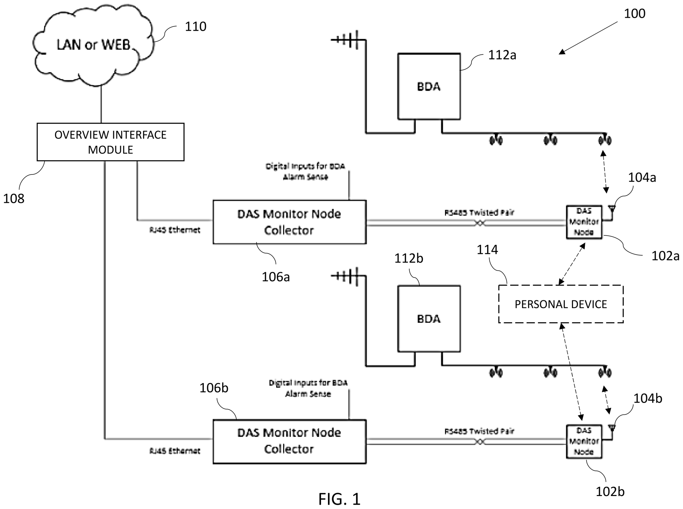

Referring now to FIG. 1, an exemplary block diagram of one embodiment of a system 100 in accordance with the subject technology is shown, particularly as implemented as a distributed antennas system (DAS). The system 100 is generally designed to measure various criteria throughout a location, such as a building, identify specific items of interest through a network of sensors and other collection devices, and assist in generating a plan to combat problems within the location. For example, in some instances, the system 100 can be utilized to identify a fire within a building through smoke, heat, and pressure sensors, and report both the location and direction of the fire, as well as the location of first responders fighting the fire.

The system 100 is designed to monitor and track performance of DAS antennas spread over a location, such as a building. The system 100 can include a plurality of DAS monitoring nodes 102a, 102b (generally 102, referred to herein as DMN). Each DMN 102 can be placed at a location near a corresponding DAS antenna 104a, 104b (generally 104) and configured to monitor the corresponding DAS antenna 104. Each DAS monitoring node 102 is designed to receive RF signals at a plurality of frequencies for different channels of the corresponding DAS antenna 104 and generate a receive signal strength indicator (RSSI) of the RF signals for each channel. Based on the RSSI, the system monitoring nodes 102 (or system 100 generally) can determine a DAS antenna status for an antennas 104 at each channel based on whether the RSSI is above a predetermined threshold, and indicate an alarm condition (e.g. through a light, sound, or otherwise) when needed based on the DAS antenna status. The system 100 also includes DAS monitor node collectors 106a, 106b (generally 106). In some instances, the DAS monitor node collectors 106 can collect information from each of the plurality of DMNs 102, including any indications of alarm conditions. An overview interface module 108 is configured to collect data from the alarm collectors 106 and/or the plurality of DAS monitoring nodes 102 and generate a system integrity overview based on the data collected.

In general, DMNs 102 can be placed in chosen critical areas of the building along the path of the DAS antennas 104. The number of DMNs 102 and placement location is determined on a building by building basis such that the user is satisfied with the information being collected to make a judgement that the DAS system 100 is operating correctly. The DMNs 102 provide locally observable information, and in some instances, can be tied to a sensor for sensing specific conditions. For example, the DMNs 102 can each include one or more sensors for measuring the following: mayday signals, first responder critical information and identity, telemetric data, temperature, barometric pressure, latitude and longitude, structure floor locations, common name locations within structure, movement with the structure, and more. Data can be reported between the components of the system 100 back to the overview interface module 108 through a wired connection, or through wireless connection, such as through a mesh network as discussed in more detail below. In some instances, a wired connection is preferred, or provided for redundancy since the monitoring system 100 is observing wireless RF signals from already potentially compromised areas. The overview interface module 108 can be connected to a LAN or web network 110 to send information outside of the system 100.

The number and positioning of the components of the system 100 may vary in different implementations. While each DMN 102 is mapped to a single antenna 104 in the system 100 shown, each DMN 102 can also be mapped to multiple antennas 104, for example, using different channels to train RSSI at each separate antenna 104 monitored. Each DMN 102 is generally mapped to a specific coverage area within the location such that the entire location has at least one DMN 102 mapped to each area within the location (as discussed in more detail below). This way, the system 100 can provide coverage over the entire location based on the DAS antenna status at each specific coverage area. In some instances, each DMN 102 is configured to monitor a path through the location, each path having one or more of the DAS antennas 104 and with some paths having several DAS antennas 104.

The system 100 can also include one or more bidirectional amplifiers 112a, 112b (generally 112) which amplify RF signals from one or more corresponding DAS antennas 104 for transmission between the DAS antennas 104 and a remote donor site (not shown) located away from the location of the DAS antennas 104.

In some instances, the system 100 can be implemented to work with one or more personal devices 114 designed to be carried by a user working within the location of the system 100. For example, the personal device 114 can be an iPhone (or other cellular phone) or a handheld beacon running a proprietary application or program as discussed herein. The personal devices 114 can wirelessly communicate with the DMNs 102 using a short range wireless technology as they move throughout the building. Each DMN 102 so configured is sometimes referred to herein as a First Responder (FR) Location Node. Since the DMNs 102 have a known position within the location, various techniques can used to determine a location of the personal devices 114 (and people wielding them) as they move through the building.

In some instances, each device can be configured as a Specialized Personal Location Device (SPLD) configured to transmit the position of said device within the location. The SPLDs can be configured to announce a mayday when can be sent to the network 110 of the system 100.

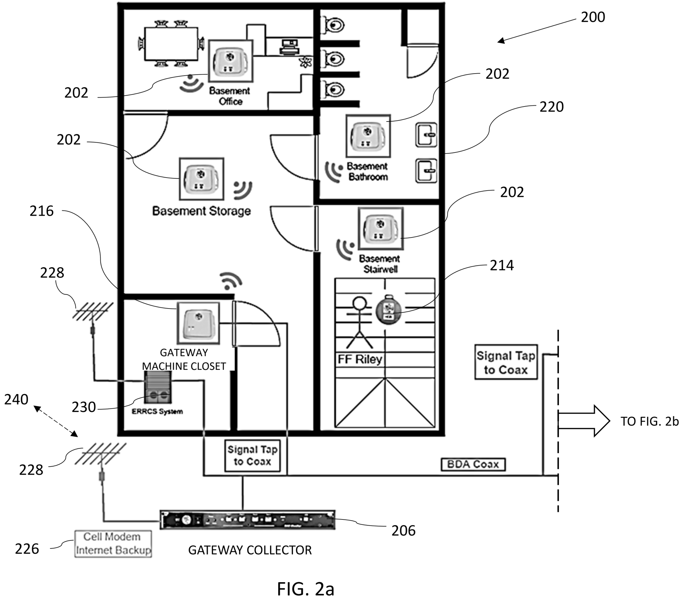

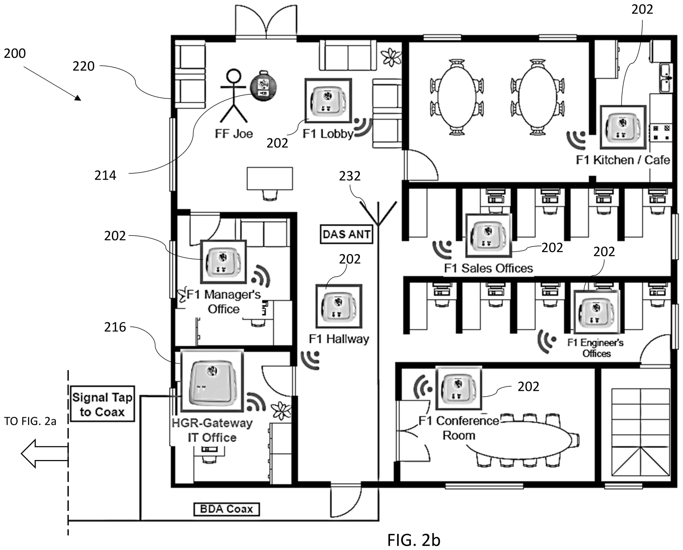

Referring now to FIGs. 2a-2b, a high-level schematic of a system 200 in accordance with the subject technology is shown. FIG. 2a represents an overhead view of a basement of a building 220, while FIG. 2b is an overhead view the first floor of the same building 220. The system 200 can be implemented separately from the system 100, or as a combined system 100 including any or all of the components of the system 100 as discussed in more detail herein. Further, the components and function of the system 200 is similar to the system 100 except as otherwise shown and described. In particular, the system 200 uses a number of first responder nodes 202 (also called receiver nodes 202 or just receivers 202) which serve a similar function to the DMNs 102, except that the receivers 202 have transmit and receive capabilities and form a mesh network throughout the building 220 by communicating with gateways 216, which communicate with gateway collectors 206 (or just collectors 206). The collectors 206 serves a similar function to the DAS monitor node collectors 106 of the system 100, aggregating information from the various devices within the system 200, but as part of the mesh network of the system 200. Further, beacons 214 are provided which are carried by first responders in the building 220 and function similarly to personal devices 114 except as otherwise shown and described.

In one example of the system 200, receivers 202 are installed structure-wide in the building 220, placed strategically placed throughout the structure 220 to enable full coverage mapping via a mesh network between the receivers 202 and gateways 216. When properly installed, each receiver 202 is hard coded with critical data including floor number, latitude and longitude, baseline barometric pressure, as well as other data helpful to assist in position tracking. The receivers 202 also include integrated onboard sensors and can monitor and transmit information via the sensors as well as precise location coordinates with unique receive node identification information allowing for precise building mapping of the receivers 202.

The receivers 202 have firmware designed to continually process the sensor data as well as monitoring for signals generated by the beacons 214, which are worn by the first responders during emergency incidents. The receivers 202 also serves as repeaters and relay all these data wirelessly back to the gateways 216, which acts as a wireless hub aggregating information for a designated floor of the structure 220.

The system 200 provides a redundant, mesh enabled, structure wide wireless communication system operating independently from any commercial building systems. Meshing is accomplished through the receivers 202 facilitating communication between receivers 202 in proximity to one another. Using meshing allows for multiple paths for data to reach ultimate destination (e.g. the gateway collector 206). Further utilizing the sensor information at each receiver 202, the system 200 provides the structure 220 with an independent redundant self-healing heat mapping, fire tracking, and first responder tracking system.

The system 200 determines locations of the beacons 214 via their communication with the receivers 202. The system 200 can at relative signal strength and other basic signal characteristics at each receiver 202, with each receiver 202 utilizing an algorithm that applies internal weighting and scoring logic to determine which receivers 202 are most likely closest to the responder beacon 214 at a given moment. By observing how signal strength differs between receivers 202 and how those patterns remain consistent or shift over time, the system 200 calculates (i.e. estimates) the beacon's 214 location, and that of the individual carrying the beacon 214, based upon movement and direction of the beacon 214. To that end, the beacon 214 reports position using practical information such as floor level and/or geographic coordinates derived from the receiver locations 202, updating the estimate as new signal data is received.

Similar logic and algorithmic calculations are utilized to locate and track movement of a fire within the structure 220 as well. In such instances, the receivers 202 can be designed with an integrated smoke, temperature, pressure, or similar sensors to track data that may be relevant in tracking a fire. For example, the corresponding sensors can measure: mayday signals, first responder critical information and identity, telemetric data, temperature, barometric pressure, latitude and longitude, structure floor locations, common name locations within structure, movement with the structure, and more. Weighting and constant comparisons of the receivers within the mesh network allows for very precise origin and directional movement of fires within the structure 220. Notably, while fire tracking is one use of the system, the receivers 202 can also include other sensors for other use cases, such as a gunshot sensor. The receivers 202 are designed to integrate with virtually any known sensor for use in the system.

On each floor, a gateway device 216 is positioned to send the data from the receivers 202 a centralized collector device 206 via an independently wired serial network. Collectors 206 contain custom firmware and software which continuously poll Gateways for aggregated information. Collectors 206 are designed to allow for multiple redundant pathways out of the building 202 (e.g. through antenna 226), and primarily is LAN/WAN based, but a cellular modem backup 228 is available as well.

Additionally, the system 200 is also designed to allow for integration with existing building ERCES (Emergency Responder Communication Enhancement Systems) 230 if desirable. In this scenario, the receivers 202 will work as described above, and transmit data to the gateways 216, but the gateways 216 will utilize the ERCE System 230 to backhaul to the collector 206.

The collector 206 provides the user with an accessible web page and graphical user interface. Information such as heat mapping, first responder location (via beacons 214), mayday, barometric pressure, and other information of interest are available in tabular and/or graphical format. The collectors 206 are also designed to provide a standard interface to allow for interconnection with any incident command system software package to publish data, for example, after the data is transmitted out of the system 200.

In an emergency, the receivers 202 provide real-time temperature data in the form of a heat maps of the structure 220. Receivers 202 are designed with the ability for users to set a predetermined and/or system default temperature threshold and hysteresis for initiation of a "fire incident." The receiver 202 will send the "Elevated Temperature" notification to the gateway 216 which in turn will send to the collector 206 to initiate and alarm. These data enable the first responders to strategically fight any fire within the structure as they know where it originated and which direction it was progressing. In addition, the receivers 202 provide exact floor and latitude and longitude coordinates and the proximity of any first responder (via their personal beacon 214) in the structure 220 to the nearest receiver 202. A triangulation method can be used between receivers 202 to pinpoint a precise location of beacon 214 based on its signal strength to three or more receivers 202. The mesh design allows for more precise triangulation between devices, thereby offering a more exact location of personnel.

As such, the system 200 enables first responders to quickly and strategically attack a fire within a multistory building 220, thereby limiting structure damage, reducing time to extinguish the fire, and reducing the time first responders are on site and in harm's way. Additionally, the beacons 214 include a mayday alarm capability. Should a first responder experience a situation in which they are in peril, they could activate the mayday alarm which initiates bi-directional communication to provide exact location details to facilitate rescue.

In another embodiment, the system 200 can include components of the system 100, such as the DAS monitoring nodes 102 and one or more DAS antennas 232. When used in tandem the components of both systems 100, 200 will allow all the aforementioned attributes including tracking of first responders, mayday locational capabilities and the ability to track and target fires within the structure 220, and the system 200 will add the ability to remotely manage and monitor the DAS antenna network to ensure that emergency communications are functional and meeting minimum criteria throughout the structure 220

Furthermore, the DAS monitoring system 100 is capable of indicating where a first responder is keying up a radio device within the structure 220 and how close to a monitor node 102 that person is physically located. This serves two purposes. First, the system 100 can provide a location based upon the RF transmission signal. Second, if the first responder stops communication it shows the last known location to facilitate a potential rescue. The DAS monitoring features add the ability to actively monitor and determine if RF signals delivered throughout the DAS antenna system are at proper levels and/or being transmitted and received.

Thus, unlike DAS systems which can stop working during emergencies, the system 200 disclosed herein can monitor and alert the structure maintenance team of the DAS system problems and target the areas of the DAS network that require service. The incorporated DAS system 100 issues can also be sent out of the structure as an alert to first responders to make them aware of potential problems with the DAS systems 100 as they enter the building during an emergency. This redundancy gives first responders the confidence that they will have communication in the event of an emergency.

In such a design, the DAS monitor nodes 102 are located strategically throughout the structure including sub-basement and they are designed to continuously monitor the receive signal strength level (RSSI) and continuously compare it to baseline to determine if the signal strength is capable of first responder communications. The nodes 102 also have on board capability to be programmed to have specific reception on the designated frequency assigned to the first responders in each location.

In another embodiment, the DAS monitoring system 100 and the system 200 can be combined into single system of meshed receivers 202 that are designed to perform the duties of both systems through a single integrated unit. The data collected can be consolidate and sent out of the structure through a signal collector 206 that is programmed to collect and send data from both systems to any incident command software package or directly to a designated location for analysis. Full integrated system alarming and proactive monitoring are also features of the combined systems based upon pre-set baseline data. Thus, enabling the structure 220 to have a single installed system capable monitoring and alarming on both the health of the DAS communication system and effective tracking and location of first responders and tracking and monitoring of fires within the structures 220.

In some instances, the system 200 can also include an overview interface module 240. The overview interface module 240 can be configured to collect data from the collector 206 and/or the plurality of DMN 102 and generate a system integrity overview based on the data collected.

As such, the systems disclosed herein provide a number of advantages over those that came before.

The systems disclosed herein can provide effective heat mapping and fire tracking within a structure. This allows for strategic firefighting and will revolutionize how fires are fought in multistory structures. The systems will reduce time to locate and attack fire, reducing overall structure damage and speed to extinguish flames. Further, the systems will reduce overall time on site and increase the efficiency and capacity of local fire companies. The systems will also reduce time inside a structure and potentially in harm's way.

The systems also allow for effective mesh communication and redundancy between the system components. This allows for communication between devices and full coverage redundancy during emergencies, offering a level of self-healing should receivers be lost to fire. The systems provide strategic location and tracking of incident and first responders in a structure by floor and proximity to system receivers. Further, the setup of the systems allow for precise triangulation of fire (or other emergency situation) location and first responder location.

The systems can implement communication technologies such as Bluetooth, LoRa and Wireless RF communication, and other short and medium-range communication technologies to avoid being reliant on WiFi, structure power, and/or cellular networks. The systems can backhaul on the existing ERRCs or In-Building BDA systems, or act as a standalone system and operate via serial connections.

The components of the system are designed with a 48 hour power backup to ensure all components function during emergencies, including when power is cut to a structure.

The systems run with flexible AC/DC low voltage power requirements, and are designed to function regardless of the incoming power service and international standards.

The system components are designed to transmit and receive various data points. For example, the system components, such as the receivers 202, are designed to transmit and receive multiple data streams from a variety of sensors, including but not limited to: mayday signals, first responder critical information and identity, telemetric data, temperature, barometric pressure, latitude and longitude, structure floor locations, common name locations within structure, movement with the structure, and more.

The systems provide first responder mayday capability. In particular, the systems are designed to allow for an immediate reaction to a mayday signal from a wearable device (e.g. personal device 114 or beacon 214) to trigger coordinated real-time rescue actions. The devices may include audio and/or visual indicators that initiate when the mayday button is activated. The wearable device allows for bi-directional communication to acknowledge receipt of the mayday signal.

The systems are configured to provide exact locational data through triangulation of the first responder who initiated the mayday.

The systems are also compatible with incident command center software. For example, the systems package the collected data in a manner that is able to be understood by known incident command software packages.

The systems provide enhanced tracking and personnel information as called out above to provide a more complete incident management view.

The systems and components discussed above provide a proprietary and stand-alone first responder and building protection system. All devices in the system are embedded with firmware to enable the system functionality discussed herein. The systems are capable of modification to incorporate into existing building control systems. Further, the system can be incorporated into existing structural emergency protection systems. As an example, in addition to the sensors which are part of the systems disclosed herein, the systems may integrate with existing sensors (e.g. smoke detectors, exit signs, CO sensors, strobes, etc.) as one of the sensors connected to a corresponding receiver 202.

The systems and components discussed above provide standalone DAS communication monitoring. The receiver nodes are designed to monitor the RSSI of the RF signals to baseline and look for drops and/or reductions in signal strength. The system can locate and alarm on specific areas of the DAS system needing attention based on sensors on the receivers and locate and alarm when there is a lack of functionality of a critical DAS system. The systems can provide locational information on first responders within a structure based upon the last known location in which they "keyed-up" their radio.

In some instances, the systems provide a combined DAS communication monitoring system and first responder location and fire tracking system. Information for these systems can be combined in a single collection device (e.g. collector 206). Receivers 202 can be configured for both transmission and receipt of critical data, providing functionality to enable monitoring the combined system and fire tracking data within the structure 220. In such a system, the joint receivers 202 are mesh capable and can backhaul via existing DAS systems or stand along serial communication. Further, the joint receiver 202 data will combine into a joint collector (e.g. collector 206) through which the information will be accessible. The systems provide alarming on critical data. Further, the collectors (e.g. collector 206) display a user interface which is configured to share information with various incident command packages.

As discussed above, the systems can include software and can be implemented through one or more designated computers and/or servers configured to execute software instructions and carry out functions in accordance with the teachings herein. It should be understood that as part of these systems, commercially available hardware components may be employed to run the software described herein. However, that hardware must be particularly configured to carry out the software instructions, in accordance with the teachings herein.

More particularly, functions of systems and methods described herein can be implemented in digital electronic circuitry, in computer hardware, firmware, software and combinations thereof. As described herein, unless specified otherwise, a computer program can be provided in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps and functions can be performed by one or more programmable processors executing a computer program to perform functions of the invention by operating on input data and generating output. Method steps can also be performed by an apparatus which can be implemented as special purpose logic circuitry. The circuitry can, for example, be a FPGA (field programmable gate array) and/or an ASIC (application specific integrated circuit). Subroutines and software agents can refer to portions of the computer program, the processor, the special circuitry, software, and/or hardware that implement that functionality.

Processors suitable for the execution of a computer program include, by way of example, both general and special purpose microprocessors, and any one or more processors of any kind of digital computer. Generally, a processor receives instructions and data from a read-only memory, a random-access memory, or both. The essential elements of a computer are a processor for executing instructions and one or more memory devices for storing instructions and date.

Generally, a computer can include, can be operatively coupled to receive data from and/or transfer data to one or more mass storage devices for storing data (e.g., magnetic, magneto-optical disks, or optical disks).

A computer module can refer to a discrete unit within a system which includes a set of components designed to execute instructions to perform a specialized function as part of a system. A computer module can include, for example, memory and one or more processors specially designed to carry out the specialized functions.

Data transmission and instructions can also occur over a communications network. Information carriers suitable for embodying computer program instructions and data include all forms of nonvolatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

To provide for interaction with a user, the system and methods described herein can be implemented using a computer having a display device. The display device can, for example, be a cathode ray tube (CRT) and/or a liquid crystal display (LCD) monitor. The interaction with a user can, for example, be a display of information to the user and a keyboard and a pointing device (e.g., a mouse) by which the user can provide input to the computer (e.g., interact with a user interface element). Other kinds of devices can be used to provide for interaction with a used. Other devices can, for example, be feedback provided to the user in any form of sensory feedback (e.g., visual feedback, auditory feedback, or tactile feedback). Input from the user can, for example, be received in any form, including acoustic, speech, and/or tactile input.

The systems described herein can include a distributed computing system that includes a back-end component. The back-end component can, for example, be a data server, a middleware component, and/or an application served. The systems descried herein can be include a distributing computing system that includes a front-end component. The front-end component can, for example, be a client computer having a graphical user interface, a Web browser through which a user can interact with an example implementation, and/or other graphical user interfaces for a transmitting device. The components of the system can be interconnected by any form or medium of digital data communication (e.g., a communication network). Examples of communication networks include a local area network (LAN), a wide area network (WAN), the Internet, wired networks, and/or wireless networks.

The system can include clients and servers for data transmission. A client and a server are generally remote from each other and typically interact through a communication network. The relationship of client and server arises by virtue of computer programs running on the respective computers and having a client-server relationship to each other.

Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), 80211 network, 80216 network, general packet radio service (GPRS) network, HiperLAN), and/or other packet-based networks. Circuit-based networks can include, for example, the public switched telephone network (PSTN), a private branch exchange (PBX), a wireless network (e.g., RAN, Bluetooth, code-division multiple access (CDMA) network, time division multiple access (TDMA) network, global system for mobile communications (GSM) network), and/or other circuit-based networks.

Devices for transmitting or receiving signals can include, for example, a computer, a computer with a browser device, a telephone, an IP phone, a mobile device (e.g., cellular phone, personal digital assistant (PDA) device, laptop computer, electronic mail device), and/or other communication devices.

All references cited herein are incorporated by reference, as though fully set forth herein. All orientations and arrangements of the components shown herein are used by way of example only. Further, it will be appreciated by those of ordinary skill in the pertinent art that the functions of several elements may, in alternative embodiments, be carried out by fewer elements or a single element. Similarly, in some embodiments, any functional element may perform fewer, or different, operations than those described with respect to the illustrated embodiment. Also, functional elements shown as distinct for purposes of illustration may be incorporated within other functional elements in a particular implementation.

While the subject technology has been described with respect to preferred embodiments, those skilled in the art will readily appreciate that various changes and/or modifications can be made to the subject technology without departing from the spirit or scope of the subject technology. For example, each claim may depend from any or all claims in a multiple dependent manner even though such has not been originally claimed.

## Claims

1. A combined distributed antenna system (DAS) and mesh network system configured to operate at a set location, comprising:
a plurality of DAS monitoring nodes (DMN), each DMN configured to monitor at least one corresponding DAS antenna, the DMN each configured to:
receive RF signals at a plurality of frequencies for different channels of the at least one corresponding DAS antenna;
generate a receive signal strength indicator (RSSI) of the RF signals for each channel; and
determine a DAS antenna status for each channel based on whether the RSSI is above a predetermined threshold; and
a mesh network formed between a plurality of receivers, a plurality of beacons, at least one gateway device, and at least one collector, wherein:
each receiver is positioned at a unique position within the location and is configured to wirelessly transmit and receive data over the mesh network, each receiver including a unique identification with location coordinates indicative of its position within the location, and each receiver further including a corresponding sensor configured to take measurements proximate to said receiver;
each beacon is configured to be carried by a user and to communicate with the receivers;
each gateway device is configured to receive data from a plurality of the receivers and transmit data to the collector,
wherein the system is configured to:
map a layout of the receivers within the location based on the unique identification of each receiver;
determine a location of each beacon based on communication between the beacon and receivers and using the location coordinates of the receivers;
indicate an alarm condition when needed based on DAS antenna status; and
determine a position of condition within the location based on data from the sensors and the DMNs.

2. The system of claim 1, wherein each beacon is a Specialized Personal Location Device (SPLD) configured to:
transmit the position of said device within the location; and
announce a mayday across the mesh network for said SPLD.

3. The system of claim 1, wherein:
the receivers act as repeaters to form the mesh network, relaying wireless data between the receivers and the at least one gateway device; and
each at least one gateway device acts as a wireless hub, aggregating information for one designated floor of a building corresponding to the location.

4. The system of claim 1 wherein the system further incorporates an emergency responder communication enhancement system as part of the mesh network to backhaul data to the collector.

5. The system of claim 1, wherein:
the receivers each include a corresponding temperature sensor to measure temperature data proximate said receiver; and
the mesh network forms a heat map of a structure at the location based on temperature data at the receivers.

6. The system of claim 5, wherein receivers are configured such that when the temperature proximate the receiver exceeds a set threshold, said receiver sends an elevated temperature notification to a gateway, which in turn sends an elevated temperature notification to the collector to initiate an alarm condition.

7. The system of claim 1, wherein each receiver includes at least one sensor configured to measure one or more of the following: mayday signals, first responder critical information and identity associated with one of the beacons, telemetric data, temperature, barometric pressure, latitude and longitude, structure floor locations, common name locations within structure, beacon movement with the structure.

8. The system of claim 1, wherein each beacon includes a mayday alarm activatable at the beacon which initiates bi-directional communication over the system and sends a current position of the beacon within the location.

9. The system of claim 1, wherein anytime a radio within the location is keyed-up, the system stores last known location information for said radio based on the proximity of the receivers.

10. A system for monitoring and tracking performance of a plurality of distributed antenna system (DAS) antennas spread over a location, comprising:
a plurality of DAS monitoring nodes (DMN), each DMN configured to monitor at least one corresponding DAS antenna, the DMN each configured to:
receive RF signals at a plurality of frequencies for different channels of the at least one corresponding DAS antenna;
generate a receive signal strength indicator (RSSI) of the RF signals for each channel;
determine a DAS antenna status for each channel based on whether the RSSI is above a predetermined threshold; and
indicate an alarm condition when needed based on DAS antenna status;
at least one alarm collector configured to collect information from each of the plurality of DMNs, including any indications of alarm conditions; and
an overview interface module configured to collect data from the alarm collector and/or the plurality of DAS monitoring nodes and generate a system integrity overview based on the data collected.

11. The system of claim 10, further comprising a bidirectional amplifier which amplifies RF signals for transmission between the DAS antennas and a remote donor site located away from the location of the DAS antennas.

12. The system of claim 10, wherein:
each DMN is mapped to a specific coverage area within the location such that the entire location has at least one DMN mapped to each area within the location; and
the system is further configured to determine coverage over the entire location based on the DAS antenna status at each specific coverage area.

13. The system of claim 10, wherein at least one DMN monitors multiple corresponding DAS antennas.

14. The system of claim 10, wherein:
each DMN is configured to monitor a path through the location, each path having one or more of the DAS antennas; and
at least one DMN monitors a path comprised of multiple DAS antennas.

15. The system of claim 10, wherein at least one of the DMN is further configured to provide location information indicating a location of the DMN.

16. The system of claim 15, wherein the at least one DMN configured to provide location information is configured as a First Responder (FR) Location Node.

17. The system of claim 16, wherein the FR Location Node is configured to utilize a short-range wireless technology to communicate with an application on a device to determine a proximity to the FR Location Node;
optionally wherein the system is configured to process device proximity information from multiple FR Location Nodes to determine a position of the device within the location;
optionally wherein each device is a Specialized Personal Location Device (SPLD) configured to transmit the position of said device within the location; and
each device is connected to a network and configured to announce a mayday, for said device, across the network;
optionally wherein a plurality of DMN are configured as First Responder (FR) Location Nodes; and
the device can be a cellphone or a Specialized Personal Location Device (SPLD) carried by an individual, the device configured to communicate with the FR Location Node using the short-range wireless technology to determine a position of the device when said individual is in close proximity to one of the FR Location Nodes.
